# EUROPÄISCHE PATENTSCHRIFT

(11) **EP 0 572 436 B1**
(45) Veröffentlichungstag und Bekanntmachung des Hinweises auf die Patenterteilung: **10.05.1995**
(21) Anmeldenummer: 92903594.7
(22) Anmeldetag: 04.02.1992
(51) Int. Cl.: G01M 13/04, G01H 1/00

(54) **VERFAHREN UND VORRICHTUNG ZUR PRÜFUNG VON MOTOREN AUF LAGERSCHÄDEN UND/ODER UNZULÄSSIGE VIBRATIONEN**
METHOD AND DEVICE FOR TESTING MOTORS FOR BEARING DAMAGE AND/OR UNALLOWABLE VIBRATIONS
PROCEDE ET DISPOSITIF DE CONTROLE DE MOTEURS POUR LA DETECTION DE DETERIORATIONS DES PALIERS ET/OU DE VIBRATIONS NON TOLEREES

(30) Priorität: 18.02.1991 DE 4104961
(43) Veröffentlichungstag der Anmeldung: 08.12.1993
(73) Patentinhaber: SIEMENS AKTIENGESELLSCHAFT, 80333 München (DE)
(72) Erfinder: LINDE, Mathias, D-8500 Nürnberg (DE)
(86) Internationale Anmeldenummer: DE9200069
(87) Internationale Veröffentlichungsnummer: WO9215003

(56) Entgegenhaltungen:
- SOVIET INVENTIONS ILLUSTRATED, Section EI, Week 8725, 1. Juli 1987; Derwent Publications Ltd., London, GB; Class S, AN N87-131996 & SU-A-1 267 538
- SOVIET INVENTIONS ILLUSTRATED, Section EI, Week 8332, 21. September 1983; Derwent Publications Ltd., London, GB; Class S, AN N83-141099 & SU-A-966 522
- PATENT ABSTRACTS OF JAPAN, vol. 9, no. 156 (P-368)(1879) 29. Juni 1985 & JP-A-60 031 036

## Beschreibung

Die Erfindung bezieht sich auf ein Verfahren zur Prüfung von Motoren auf Lagerschäden und/oder unzulässige Vibrationen, insbesondere zur Prüfung von Gebläsemotoren für Staubsauger oder dergleichen. Daneben bezieht sich die Erfindung auch auf die zugehörige Vorrichtung zur Durchführung des Verfahrens.

Insbesondere bei einer flexiblen Fertigung von Motoren ist im Rahmen der Qualitätskontrolle eine vollautomatische Einlauf- und Prüfstrecke für die gefertigten Motoren vor deren weiteren Verwendung notwendig. Dazu müssen geeignete Prüfanlagen vorhanden sein, an die insbesondere folgende Bedingungen gestellt werden:
- robuste Mechanik für den Einsatz in rauher Umgebung bei 24-Stunden-Betrieb
- hohe Flexibilität für ein breites Prüflingsspektrum
- einfache Kalibrierung
- hohe Prüfschärfe
- kostengünstige Realisierung
- einfache Reproduzierbarkeit der Prüfergebnisse
- Integration in eine vollautomatische Fertigungslinie.

Obige Punkte bekommen speziell bei der Fertigung von Staubsaugern Bedeutung, da das eigentliche Staubsaugergebläse von einem Universalmotor angetrieben wird. Üblicherweise ist dessen Drehzahl der anliegenden Spannung proportional, wobei durch Variation der Versorgungsspannung Drehzahlen von 0 bis etwa 27.000 U/min (0 bis ca. 450 Hz) eingestellt werden können.

Aus der SU-A-1 157 383 ist bereits ein Qualitätsprüfverfahren für Kugellager von Elektromotoren vorbekannt, bei dem der Läufer des Elektromotors durch einen Außenantrieb in Drehung versetzt und das Widerstandsmoment der Läuferdrehung in Abhängigkeit von der Zeit mit Hilfe eines Momentenmessers kontinuierlich gemessen und aufgezeichnet wird, bei dem sich ferner die periodischen Komponenten des Widerstandsmomentes durch die Drehzahl des Läufers und des Separators in bezug auf den äußeren und inneren Ring ergeben und gemäß dem Verhältnis der Amplituden der Komponenten Fehler auf der Abrollfläche festgestellt werden. Dieses Qualitätsprüfverfahren soll sich durch eine besondere Genauigkeit auszeichnen; es ist aber insbesondere wegen der Drehmomentenerfassung vergleichsweise komplex.

Aufgabe der Erfindung ist es demgegenüber, ein Verfahren und eine zugehörige Vorrichtung zur Durchführung des Verfahrens anzugeben, die mit vereinfachten Mitteln auskommen.

Die Aufgabe ist erfindungsgemäß dadurch gelöst, daß bei einem Verfahren der eingangs genannten Art die vom Motor in vertikaler axialer Lage und dessen Betrieb auf eine Unterlage wirkende Kraft erfaßt und bei Änderung der Drehzahl des Motors gemessen und ausgewertet wird. Dabei wird für die Auswertung diejenige Drehzahl des Motors ausgewählt, bei der seine mechanischen Komponenten in Resonanz sind. Vorzugsweise kann beim Prüfvorgang die Drehzahl des Motors über den Resonanzbereich variiert werden. Dabei werden vorteilhafterweise während des Prüfvorganges die Motoren bei Gleichstrom betrieben.

Im Rahmen der Erfindung wird für die Auswertung des Kraftsignals die Gewichtskraft des Motors eliminiert und werden nur die Kraftänderungen bei der Variation der Drehzahl des Motors erfaßt. Unter anderem können dabei aus dem Kraftsignal in vorteilhafter Weise Aussagen über Art und Aufbau des Motorlagers abgeleitet werden.

Bei einer erfindungsgemäßen Vorrichtung mit einer Meßstation zur Messung der von einem Motor bei Drehzahlveränderungen auf eine Unterlage ausgeübten Kräfte ist zur Durchführung des obigen Verfahrens die Meßstation zur Aufnahme des Motors mit seiner Drehachse in vertikaler Richtung ausgebildet und weist die Meßstation einen Sensor für die Aufnahme von dynamischen Kraftänderungen auf.

Vorteilhafterweise kann zur Aufnahme des Motors mit seiner Drehachse in vertikaler Richtung ein Werkstückträger vorhanden sein. Dadurch ist es möglich, daß jeweils einer von mehreren jeweils mit einem Prüfling bestückten Werkstückträger im Durchlauf auf die Meßstation aufgesetzt werden kann.

Mit dem erfindungsgemäßen Verfahren und der zugehörigen Vorrichtung kann eine Anlage aufgebaut werden, die mit einer robusten Mechanik für den Einsatz in rauher Umgebung bei einem 24-Stunden-Betrieb geeignet ist. Dabei ergibt sich eine hohe Flexibilität für ein breites Prüfspektrum mit einfacher Kalibrierung und hoher Prüfschärfe. Insgesamt kann eine solche Vorrichtung ohne besonderen Aufwand in eine vollautomatische Fertigungslinie integriert werden, wobei die Prüfergebnisse in einfacher Weise reproduzierbar und mittels eines Personal-Computers weiter verarbeitbar sind.

Weitere Einzelheiten und Vorteile der Erfindung ergeben sich aus der nachfolgenden Figurenbeschreibung eines Ausführungsbeispiels anhand der Zeichnung. Es zeigen
- FIG 1: schematisch den Aufbau einer erfindungsgemäßen Vorrichtung,
- FIG 2 und 3: das Kraft-Zeitsignal und das daraus abgeleitete Frequenz-Spektrum der Kraft eines defekten Gebläses, FIG 4 und 5 entsprechende Kurven für ein intaktes Gebläse und FIG 6 ein Ablauf-Diagramm für eine Lagerschadenbefundung.

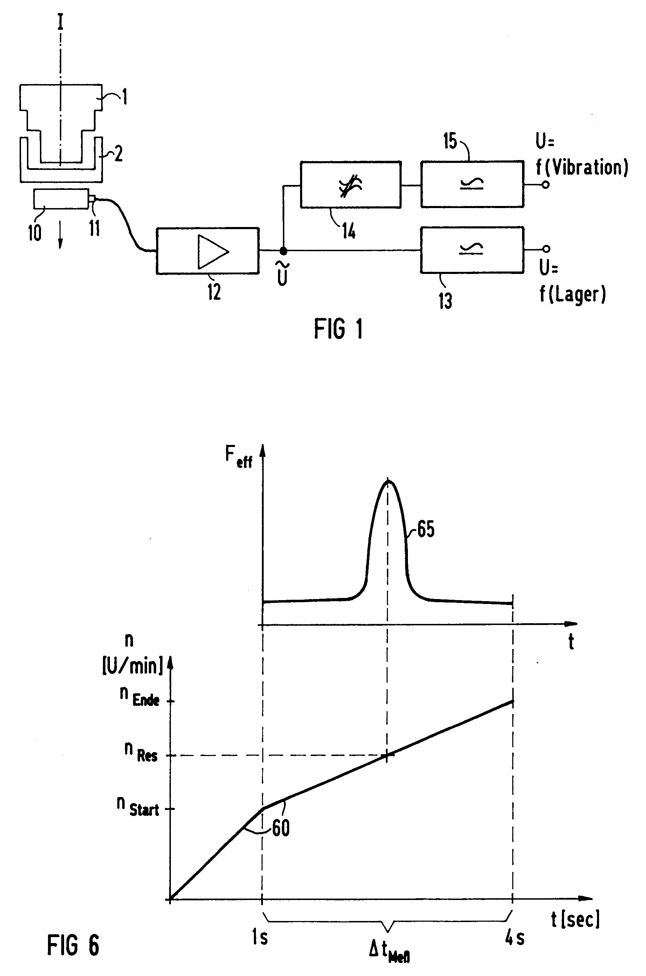

In Figur 1 ist ein Gebläse als Prüfling mit 1 bezeichnet. Derartige Gebläse, die beispielsweise in einen Staubsauger eingebaut werden sollen, werden üblicherweise von einem Universalmotor mit Drehachse I angetrieben, dessen Drehzahl zur anliegenden Spannung proportional ist. Durch Variation der Versorgungsspannung können Drehzahlen von 0 bis 27.000 U/min, d. h. etwa 0 bis 450 Hz, eingestellt werden. Die Motor-Drehachse I kann bei der bestimmungsgemäßen Verwendung des Gebläses 1 eine beliebige Lage haben.

Der Prüfling 1 ist in Figur 1 auf einem Werkstückträger 2 in der Weise angeordnet, daß die Drehachse I vertikal ausgerichtet ist. Hierfür kann der Werkstückträger 2 geeignete Hilfsmittel aufweisen.

Prüfling 1 und Werkstückträger 2 befinden sich auf einer Meßstation 10. Bei Betrieb des Motors wirken neben der Gewichtskraft dynamische Kräfte auf die Meßstation 10 ein, die erfaßt werden sollen. Hierfür ist ein Kraftaufnehmer 11 als Sensor vorhanden, der Ladungen abgibt, die den auf die Meßstation 10 einwirkenden dynamischen Kräften proportional sind. Ein anschließender Ladungsverstärker 12 erzeugt aus den Ladungen ein Spannungssignal, welches über zwei parallele Leitungszweige einerseits auf eine Effektivwert-Baugruppe 13 zur Erfassung eines für Lagerschäden signifikanten Signals (U=f (Lager)) und andererseits über einen Bandpaßfilter 14 auf eine Effektivwert-Baugruppe 15 zur Erfassung eines für die Vibration signifikanten Signales (U=f (Vibration)) geleitet wird.

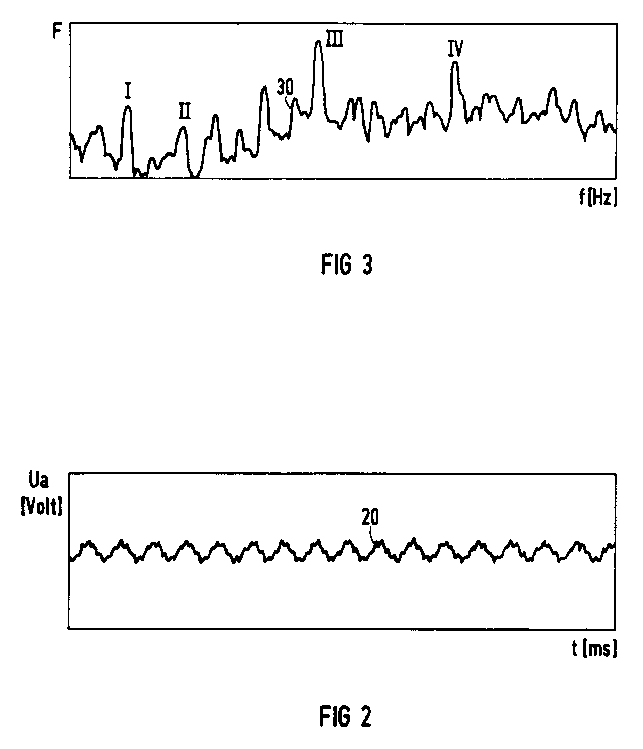

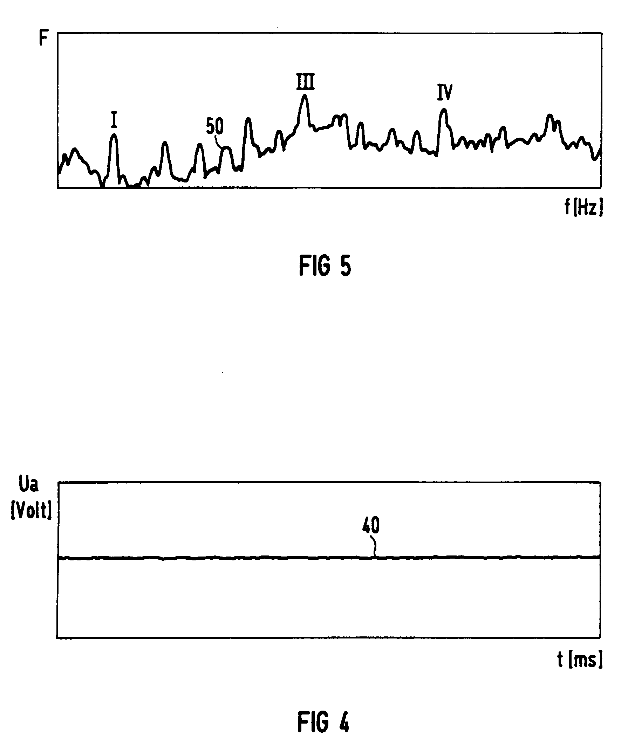

In den Figuren 2 und 4 sind jeweils der zeitliche Verlauf der Kraft für den Resonanzfall des Prüflings 1 als Signalkurven 20 und 40 dargestellt. Daraus ist jeweils ein Frequenz-Spektrum durch Fourier-Transformation des Zeitsignals (FFT) abgeleitet und in den Figuren 3 und 5 als Signalkurven 30 und 50 dargestellt.

Für die Gewinnung der Signalkurven wurden die Prüflinge mit Gleichstrom betrieben, da bei Wechselstrom Netzbrumm-Störgrößen im Kraftspektrum verstärkt auftreten. Im übrigen ist eine Gleichspannungsquelle kostengünstiger als eine in diesem Fall notwendigerweise regelbare Wechselspannungsquelle.

Insbesondere der Vergleich der Figur 2 mit der Figur 4 zeigt, daß bei einem defekten Gebläse bei Resonanzdrehzahl im Zeitsignal eine deutliche Welligkeit vorliegt, die beim intakten Gebläse nicht auftritt. Letzteres kann durch den besseren Rundlauf des Gebläses in dem Lager erklärt werden.

Die Fourier-Transformation der Zeitsignale zeigt in beiden Fällen, daß jeweils vier signifikante Punkte mit einem relativen Maximum der Amplitude vorliegen. Die Zuordnung zur Frequenz zeigt, daß das erste Maximum (I) der Drehzahl des Gebläses, beispielsweise 51Hz bzw. 3050 U/min entspricht. Das zweite Maximum (II) entspricht etwa 102 Hz, das heißt der doppelten Drehzahl des Gebläses. Das dritte Maximum (III) entspricht der Eigenresonanz des Gebläses durch die Anregung mit 51 U/sec und stellt in beiden Fällen auch das absolute Maximum dar. Schließlich ist noch ein viertes relatives Maximum (IV) vorhanden, das bei der siebenfachen Drehzahl auftritt und durch die speziell sieben Kugeln des beim Prüfling beispielhaft verwendeten Lagers erklärbar ist. Bei acht Kugeln im Kugellager wäre dieses relative Maximum entsprechend verschoben.

Ein Vergleich der Signalkurven der fehlerbehafteten Teile mit den Signalkurven von Gutteilen zeigt, daß bei Betrieb des Gebläses mit Gleichspannung bei der Resonanzdrehzahl das Zeitsignal der Kraft im wesentlichen nur die Anteile enthält, die von dem Lager des Motors verursacht werden. Aus diesem Grunde kann bei einer automatisierten Prüfung auf einen zusätzlichen Analysator zur Fourier-Analyse verzichtet werden. Es genügt vielmehr der Effektivwert-Wandler 13 gemäß Figur 1, welche die Wechselspannungen des Ladungsverstärkers 12 in eine proportionale Gleichspannung umwandelt. Letzteres Gleichspannungssignal kann in einem Prüfautomaten zur Befundung des Lagers herangezogen werden.

Bei der praktischen Realisierung des Prüfverfahrens kann auf die Drehzahlregelung und die damit verbundene Drehzahlmessung dann verzichtet werden, wenn das Gebläse aus dem Stillstand hochbeschleunigt wird, bis es den Bereich der Eigenresonanz durchlaufen hat. In der Hochlaufphase wird die dynamische Kraft kontinuierlich gemessen. Der höchste Meßwert tritt bei der Resonanzfrequenz auf und ist ein Maß für die Qualität des Lagers. Beispielsweise im Falle von Kugellagern beträgt der dynamische Kraftanteil etwa ein Drittel der Kräfte im Vergleich zu defekten Kugellagern.

Mit dem Meßaufbau gemäß Figur 1 können auch Vibrationen an Gebläsen gemessen werden. In diesem Fall werden die Gebläse aber mit ihrer Nennspannung betrieben, beispielsweise 220 V Wechselspannung. Da die angesaugte Luft zu undefinierten Verwirbelungen führt, wird zweckmäßigerweise der Luftstrom durch eine in Figur 1 nicht dargestellte Beruhigungsplatte unterbunden. Das Gebläse dreht im Leerlauf höher als unter Last. Es ergeben sich im Prinzip ähnliche Signalkurven wie in den Figuren 2 und 3 bzw. 4 und 5. Die Kräfte sind bei vibrationsarmen Gebläsen erheblich geringer als bei fehlerhaft vibrierenden Gebläsen und lassen sich aus dem Zeitsignal unmittelbar ableiten. Zur Signalverarbeitung ist dafür in Figur 1 der Bandpaßfilter 14 mit nachgeschaltetem Effektivwert-Wandler 15 entsprechend abgestimmt.

In Figur 1 ist dargestellt, daß der Prüfling 1 mittels eines Werkstückträgers 2 auf die Meßstation gesetzt wird. Ein derartiger Werkstückträger ist zwar nicht unbedingt erforderlich, allerdings zur Realisierung des Meßaufbaus in einer vollautomatischen Prüfstrecke sinnvoll. Insbesondere um fremderregte Erschütterungen des Prüflings zu verhindern, beispielsweise durch ein anderes Gebläse mit starken Vibrationen in der Prüfstrecke, werden daher die Gebläse jeweils mit ihrem Werkstückträger vom Transportmodul angehoben. Eine Aushubstation sowie eine Beruhigungsplatte sind dafür entsprechend gummigelagert. Der Ladungsverstärker kann rückgesetzt werden, um den Offset durch das Gewicht des Prüflings und des Werkstückträgers zu eliminieren.

Speziell für die Lagerschadenbefundung werden gemäß Figur 6 die Gebläse aus dem Stillstand entsprechend der Kennlinie 60 auf ca. 2000 U/min beschleunigt. Zur Verringerung der Prüfzeit wird dazu in einem ersten Schritt eine Gleichspannung von ca. 12 V aufgeschaltet. Nach etwa einer Sekunde wird in einem zweiten Schritt die Gleichspannung auf ca. 20 V erhöht, gleichzeitig der Ladungsverstärker 12 aktiviert und gemessen: Über etwa drei Sekunden wird der Effektivwert der Schwingungen im Abstand von 60 msec abgetastet und abgespeichert, wobei sich eine Signalkurve 65 ergibt. Aus den Meßwerten wird dann der Maximalwert ermittelt; sofern letzterer Wert größer als ein vorgegebener Grenzwert ist, hat das Gebläse einen Lagerschaden.

Speziell zur Vibrationsmessung wird dagegen Nennspannung 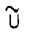 direkt auf das Gebläse geschaltet. Gleichzeitig wird die Beruhigungsplatte abgesenkt, wobei nach etwa drei Sekunden das Gebläse auf seiner Leerlaufdrehzahl ist. Der Ladungsverstärker 12 wird aktiviert und das Ausgangssignal wird über den Bandpaß 14 gemäß Figur 1, mit dem nur die Drehfrequenz hindurch gelassen wird, auf den Effektivwert-Wandler 15 gegeben. Dessen Ausgangssignal wird mit einem vorgegebenen Grenzwert verglichen und auf unzulässige Vibrationen untersucht.

Nach den Messungen wird das Gebläse von der Versorgungsspannung getrennt und, nachdem sich der Unterdruck abgebaut hat, die Beruhigungsplatte angehoben. Nunmehr kann der Werkstückträger 2 auf das Transportmodul abgesenkt werden und der Fertigungslinie zugeführt werden. Beide Einzelprüfungen haben mit der angegebenen Vorrichtung wenig mehr als 10 Sekunden benötigt.

Das neue Prüfverfahren ist außer für Gebläse auch für andere Motoren einsetzbar, sofern sie vertikal in einer Prüfaufnahme plaziert werden können. Dabei ist - wie bereits erwähnt - ein Werkstückträger nicht zwingend notwendig. In jedem Fall ist aber darauf zu achten, daß das Werkstückträgermaterial nicht die Schwingungen des Prüflinges dämpft. Es empfiehlt sich der Einsatz eines akustisch harten Materials.

## Patentansprüche

1. Verfahren zur Prüfung von Motoren auf Lagerschäden und/ oder unzulässige Vibrationen, insbesondere zur Prüfung von Gebläsemotoren für Staubsauger oder dergleichen, **dadurch gekennzeichnet,** daß die vom Motor in vertikaler axialer Lage bei seinem Betrieb auf eine Unterlage wirkende Kraft erfaßt und bei Veränderung der Drehzahl des Motors gemessen und ausgewertet wird.

2. Verfahren nach Anspruch 1, **dadurch gekennzeichnet,** daß für die Auswertung diejenige Drehzahl des Motors gewählt wird, bei der seine mechanischen Komponenten in Resonanz sind.

3. Verfahren nach Anspruch 1 und 2, **dadurch gekennzeichnet,** daß beim Prüfungsvorgang die Drehzahl des Motors über den Resonanzbereich variiert wird.

4. Verfahren nach Anspruch 1, **dadurch gekennzeichnet,** daß während des Prüfvorganges die Motoren bei Gleichstrom betrieben werden.

5. Verfahren nach Anspruch 1, **dadurch gekennzeichnet,** daß für die Auswertung des Kraftsignals die Gewichtskraft des Motors eliminiert wird und nur die Kraftänderungen bei der Variation der Drehzahl des Motors erfaßt werden.

6. Verfahren nach Anspruch 5, **dadurch gekennzeichnet,** daß aus dem Kraftsignal Aussagen über Art und Aufbau des Motorlagers abgeleitet werden.

7. Vorrichtung zur Durchführung des Verfahrens nach Anspruch 1 oder einem der Ansprüche 2 bis 6, mit einer Meßstation (10) zur Messung der von einem Motor (1) bei Drehzahlveränderungen auf die Unterlage ausgeübten Kräfte, wobei die Meßstation (10) zur Aufnahme des Motors (1) mit seiner Drehachse (I) in vertikaler Richtung ausgebildet ist und einen Sensor (11) für die Aufnahme von dynamischen Kraftänderungen aufweist.

8. Vorrichtung nach Anspruch 7, **dadurch gekennzeichnet,** daß der Meßstation (10) Werkstückträger (2) zur Aufnahme jeweils eines Motors (1) als Prüfling zugeordnet sind, wobei der Meßstation (10) jeweils alternierend ein mit einem Prüfling (1) bestückter Werkstückträger (2) aufsetzbar ist.

9. Vorrichtung nach Anspruch 8, **dadurch gekennzeichnet,** daß der Werkstückträger (2) aus akustisch hartem Material besteht.

10. Vorrichtung nach Anspruch 7, **dadurch gekennzeichnet,** daß der Sensor (11) zur Aufnahme von dynamischen Kräften ein piezoelektrischer Kraftaufnehmer ist.

11. Vorrichtung nach Anspruch 10, **dadurch gekennzeichnet,** daß dem Kraftaufnehmer (11) ein Ladungsverstärker (12) und wenigstens ein Effektivwertbildner (13, 15) zugeordnet sind.

12. Vorrichtung nach Anspruch 11, **dadurch gekennzeichnet,** daß dem Effektivwertbildner (15) ein Bandpaßfilter (14) vorgeschaltet ist.

## Claims

1. Method for the testing of motors for bearing damage and/or inadmissible vibrations, in particular for the testing of fan motors for vacuum cleaners or similar, **characterised in that** the force exerted on a base by the motor in vertical axial position during its running is recorded and on a change in the speed of the motor measured and evaluated.

2. Method according to claim 1, **characterised in that** for the evaluation that speed of the motor is selected at which its mechanical components are in resonance.

3. Method according to claim 1 and 2, **characterised in that** during the test procedure the speed of the motor is varied over the resonance range.

4. Method according to claim 1, **characterised in that** during the test procedure the motors are run on direct current.

5. Method according to claim 1, **characterised in that** for the evaluation of the force signal the weight of the motor is eliminated and only the changes in force on variation of the speed of the motor are recorded.

6. Method according to claim 5, **characterised in that** information on the nature and composition of the motor bearing are obtained from the force signal.

7. Apparatus for carrying out the method according to claim 1 or any one of claims 2 to 6, with a measuring station (10) for measuring the forces exerted on the base by a motor (1) on changes in speed, wherein the measuring station (10) is constructed so as to accommodate the motor (1) with its axis of rotation (I) in vertical direction and comprises a sensor (11) for detecting dynamic force changes.

8. Apparatus according to claim 7, **characterised in that** there are assigned to the measuring station (10) workpiece holders (2) for accommodating in each case a motor (1) as a test specimen, wherein there can be placed on the measuring station (10) alternately workpiece holders (2) each loaded with a test specimen (1).

9. Apparatus according to claim 8, **characterised in** **that** the workpiece holder (2) consists of acoustically hard material.

10. Apparatus according to claim 7, **characterised in** **that** the sensor (11) for detecting dynamic forces is a piezo-electric force transducer.

11. Apparatus according to claim 10, **characterised in** **that** there are assigned to the force transducer (11) a charge amplifier (12) and at least one rms value former (13, 15).

12. Apparatus according to claim 11, **characterised in** **that** there is connected upstream of the rms value former (15) a band pass filter (14).

## Revendications

1. Procédé pour contrôler la présence éventuelle d'endommagements de paliers et/ou de vibrations inadmissibles dans des moteurs, notamment pour le contrôle de moteurs de ventilateurs pour aspirateurs ou analogues, caractérisé par le fait qu'on détecte la force appliquée, sur un support, par le moteur dans une position axiale verticale lors de son fonctionnement et on la mesure et on l'exploite lors d'une variation de la vitesse de rotation du moteur.

2. Procédé suivant la revendication 1, caractérisé par le fait que pour l'exploitation, on choisit la vitesse de rotation du moteur, pour laquelle ses composants mécaniques sont en résonance.

3. Procédé suivant les revendications 1 et 2, caractérisé par le fait que lors de l'opération de contrôle, on modifie la vitesse de rotation du moteur dans la gamme de résonance.

4. Procédé suivant la revendication 1, caractérisé par le fait que pendant l'opération de contrôle, on fait fonctionner les moteurs avec un courant continu.

5. Procédé suivant la revendication 1, caractérisé par le fait que pour l'exploitation du signal de force, on supprime la force due au poids du moteur et on ne détecte que les variations de force qui apparaissent lors de la variation de la vitesse de rotation du moteur.

6. Procédé suivant la revendication 5, caractérisé par le fait qu'on tire des indications concernant le type et la structure du palier du moteur à partir du signal de force.

7. Dispositif pour la mise en oeuvre du procédé suivant la revendication 1 ou l'une des revendications 2 à 6, comportant un poste de mesure (10) servant à mesurer les forces, qui sont appliquées par un moteur (1) au support lors de variations de sa vitesse de rotation, le poste de mesure (10) étant agencé de manière à ce que le moteur (1) qu'il reçoit ait son axe de rotation (I) dans la direction verticale et comportant un capteur (11) servant à enregistrer des variations dynamiques de la force.

8. Dispositif suivant la revendication 7, caractérisé par le fait qu'au poste de mesure (10) sont associés des supports (2) de pièces, qui servent à recevoir respectivement un moteur (1) en tant qu'objet à tester, un support de pièce (2), équipé d'une pièce à tester (1), pouvant en alternance être mis en place dans le poste de mesure (10).

9. Dispositif suivant la revendication 8, caractérisé par le fait que le support de pièce (2) est en un matériau dur du point de vue acoustique.

10. Dispositif suivant la revendication 7, caractérisé par le fait que le capteur (11) servant à enregistrer des forces dynamiques est un capteur de force piézoélectrique.

11. Dispositif suivant la revendication 10, caractérisé par le fait qu'un amplificateur de charge (12) et au moins un dispositif (13,15) de formation de la valeur efficace sont associés au capteur de force (11).

12. Dispositif suivant la revendication 1, caractérisé par le fait qu'un filtre passe-bande (14) est branché en amont du dispositif (15) de formation de la valeur efficace.
